# EUROPEAN PATENT APPLICATION

(11) **EP 1 104 128 A1**
(43) Date of publication of application: **30.05.2001**
(21) Application number: 00929898.5
(22) Date of filing: 29.05.2000
(51) Int. Cl.: H04H 1/00, H04L 12/56, G06F 13/00

(54) **BROADCASTING SYSTEM**

(30) Priority: 28.05.1999 JP 14992599
(71) Applicant: MATSUSHITA ELECTRIC INDUSTRIAL CO., LTD., Kadoma-shi, Osaka 571-8501 (JP)
(72) Inventor: YAMAMURO, Keisei, Moriguchi-shi, Osaka 570-0046 (JP); SONODA, Yasuyuki, Kyoto-shi, Kyoto 607-8028 (JP)
(74) Representative: Beresford, Keith Denis Lewis
(86) International application number: JP0003443
(87) International publication number: WO0074279

(57) **Abstract**

A digital broadcast transmission device 31 sends programs to respective digital broadcast reception devices 41, and also sends emergency information thereto in the case of an emergency. In the event of a transmission of emergency information, the digital broadcast system 51 sends an event message. An event message is made up of a message ID consisting of alphanumeric characters and the like, and output content showing emergency information content. When a digital broadcast reception device 41 receives an event message, the device determines the output form based on the message ID. Output forms are prescribed formats for displaying output content on a display device 417. Output content is displayed on the display device 417 based on the determined output form.

## Description

### BACKGROUND OF THE INVENTION

### 1. Field of the Invention

The present invention relates to a broadcast system, more specifically to generation and reconstruction of a transport stream.

### 2. Description of the prior art

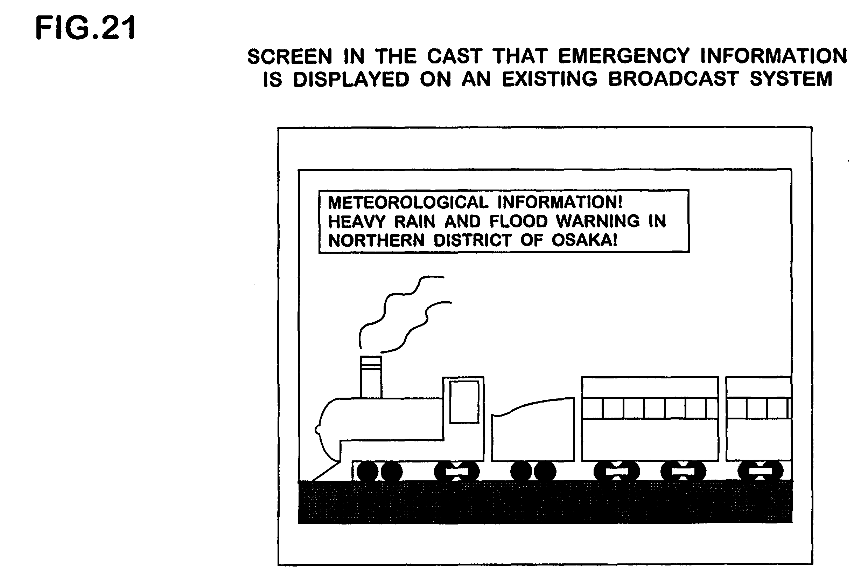

When watching television, a meteorological information or an earthquake information may appear suddenly (see Fig. 21). In the broadcast system such as a television, there is a method for displaying an emergency information such as a meteorological information on the screen of the television set utilizing a message ID. The emergency broadcast using the message ID will be explained below.

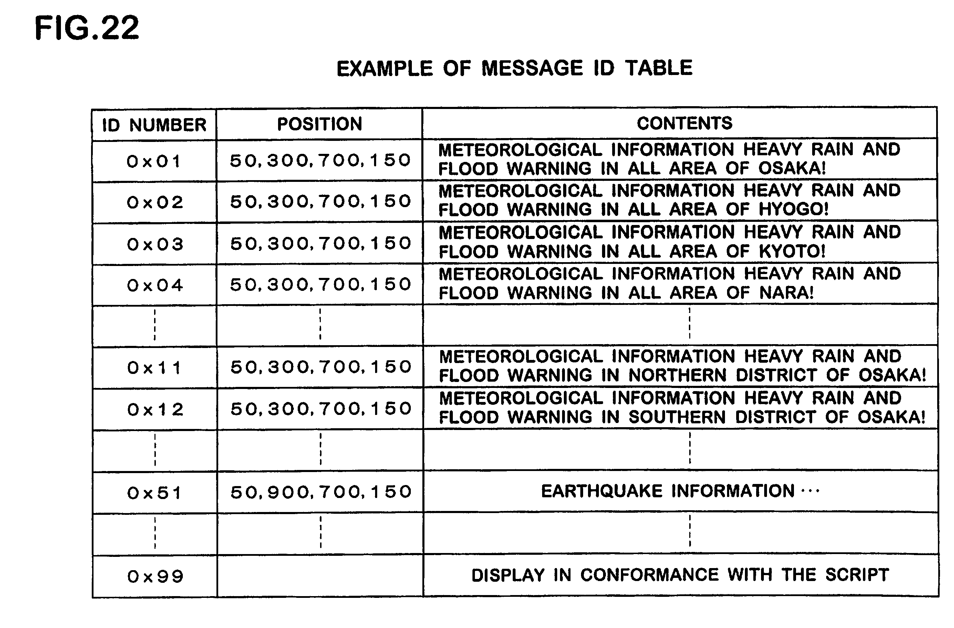

First, all contents that are assumed for the emergency information are listed. Concerning each of the emergency information, it is determined where on the screen the emergency information is to be displayed. Numbering is performed for a set of contents of the emergency information and the display position on the screen. This number is a message ID. An example of a message ID table showing the relationship among the message ID, the display position and the contents are shown in Fig. 22.

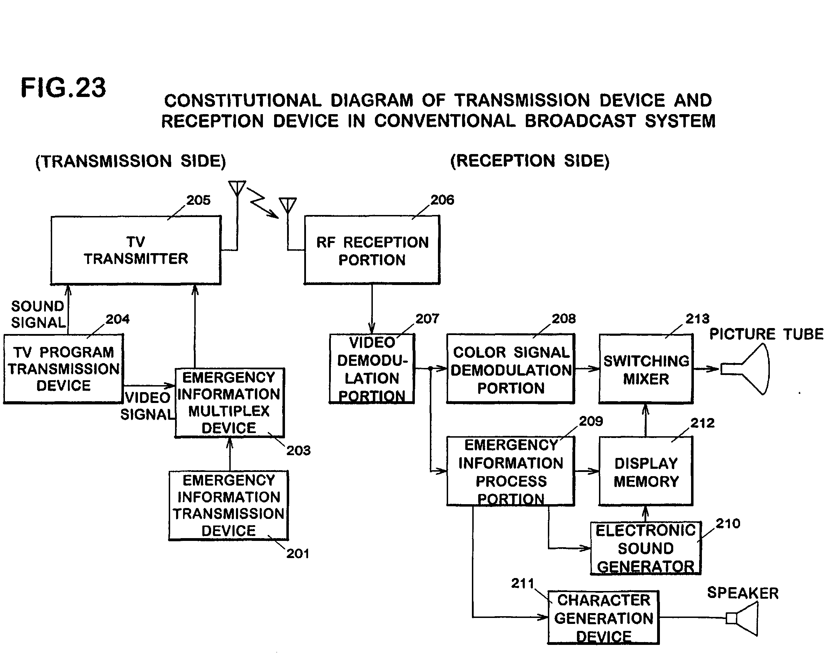

With reference to Fig. 23, it will be explained how the emergency information using the message ID is displayed on the screen of the television set. A contents provider transmits a message ID as the emergency information by an emergency information transmission device 201 when an emergency situation occurs. In an emergency information multiplex device 203, a video signal obtained by a TV program transmission device 204 and the message ID are multiplexed so as to send them to a TV transmitter 205. The TV transmitter 205 transmits the video signal and the message ID.

Each TV receiver receives the signal by the RF reception portion 206 and sends the signal to the video demodulation portion 207. The video demodulation portion 207 demodulates the video signal from the received signal. In addition, a color signal demodulation portion 208 demodulates a color information.

On the other hand, an emergency information process portion 209 extracts the message ID from the received signal. The extracted message ID is compared with a memorized message ID table, so as to extract characters to be displayed (e.g., "meteorological information ") and a output form from the message ID table. A character generation portion 210 generates a video signal related to the characters extracted by the emergency information processing portion 209. In addition, an electronic sound generator 211 generates an atmos that is used when displaying the characters in accordance with the extracted output form.

The characters generated by the character generation portion and the picture of the program are memorized in a display memory 212. Then, a switching mixer 213 switches a picture with an emergency Information and a normal program picture.

The above-mentioned emergency broadcast utilizing a message ID has some problems as follows.

The message ID is set for each of the emergency information that is assumed considering the display position and the output contents. In addition, concerning the particularly important emergency Information, adding to the display position, a display method such as a sound with the display or a blink display should be considered, so as to arrest audience's attention.

When setting the message ID, the more the above-mentioned points to be considered, the more the number of the message ID becomes.

In addition, since the contents of the emergency information is determined corresponding to the message ID, it is difficult to support promptly for an unexpected emergency situation.

Furthermore, as the content of the emergency information output is pre-determined corresponding to the message ID, it is necessary to store the output content data. Normally, the memory capacity for storing the output content is not large. Consequently, the type of output content that can be stored is limited to types of data that do not take up a great deal of space, such as text.

An object of the present invention is to provide a broadcast system which is capable of displaying the output content of the sub contents, without annotating the sub contents with output form-related script in order to display the output content on the screen.

An object of the present invention is to provide a broadcast system that can support any type of information display with fewer messages IDs.

### SUMMARY OF THE INVENTION

In this invention, a transmission device generates sub contents data including an output form ID that indicates an output form of sub contents and output contents data that indicate output contents, generates a transport stream by multiplexing at least main contents data and the sub contents data, and transmits the generated transport stream. A reception device receives the transport stream transmitted by the transmission device, determining the output form of the sub contents data in accordance with the output form that is predetermined for the output form ID in the received sub contents data, and determining the output contents of the sub contents data in accordance with the output contents data in the received sub contents data, so as to perform the reconstruction control of the sub contents data, and controls reconstruction of the main contents in accordance with the received transport stream.

Thus, it is possible to reconstruct the output contents of the sub contents, without writing an output form-related script in the sub contents in order to display the output contents on the screen. Thus, a plurality of output contents data can correspond to one output form ID.

In this invention, sub contents data are generated that include an output form ID that indicates an output form of the sub contents as well as an output contents data that indicate an output contents, and a transport stream is generated by multiplexing at least main contents data and the sub contents data.

Thus, sub contents can be generated in which a plurality of output contents data corresponds to one output form ID.

In this invention, a transport stream transmitted by a transmission device is received, the output form of the sub contents data is determined in accordance with the output form that is predetermined for the output form ID in the received sub contents data, and the output contents of the sub contents data are determined in accordance with the output contents data in the received sub contents data, so as to control the reconstruction of the sub contents data.

Thus, sub contents can be reconstructed in which a plurality of output contents data corresponds to one output form ID.

In this invention, an output form table describing the output form ID and the output form corresponding thereto is recorded.

Thus, an output form corresponding to the output form ID can be obtained easily.

In this invention, the output form includes at least a display position of the sub contents.

Thus, the relationship between the output form ID and the display position can be predetermined. Accordingly, by determining the output form ID, the display position is also determined.

In this invention, the output form includes at least information about whether the sub contents are outputted or not.

Thus, the relationship between the output form ID and the information about whether the sub contents are outputted or not can be predetermined. Accordingly, if the output form ID is determined, whether the sub contents are outputted or not is also determined.

In this invention, the output form includes at least an output time of the sub contents.

Thus, the relationship between the output form ID and the output time of the sub contents can be predetermined. Accordingly, if the output form ID is determined, the output time of the sub contents is also determined.

In this invention, the output form includes at least an output condition of the sub contents.

Thus, relationship between the output form ID and the output condition of the sub contents can be predetermined. Accordingly, if the output form ID is determined, the output condition of the sub contents is also determined.

In this invention, the reception device determines the output form of the sub contents in accordance with a predetermined output form when the received output form ID is not a predetermined one.

Thus, even if an output form ID that is not predetermined is received, the output form of the sub contents can be determined securely.

In this invention, the sub contents are commercial. Thus, the output form of the commercial can be specified by the output form ID.

In this invention, sub contents are emergency information. Thus, output form of the emergency information can be specified by the output form ID.

Contents data according to this invention are contents data in which main contents data and sub contents data are multiplexed, and the sub contents data include an output form ID that indicates an output form of the sub contents and output contents data that indicate output contents.

Thus, the output form can be specified by the output form ID, so that the sub contents data can be generated easily.

In a reconstruction program according to this invention, the output form of the sub contents data is determined in accordance with a predetermined output form for an output form ID in the sub contents data, and output contents of the sub contents data are determined in accordance with output contents data in the sub contents data, so as to perform reconstruction control of the sub contents data.

Thus, a plurality of output contents data can correspond to one output form ID.

A data structure according to this invention includes an output form description portion that describes an output form and an output form ID description portion that describes an output form ID corresponding to the output form described in the output form description portion.

Thus, only by specifying the output form ID the output form can be determined.

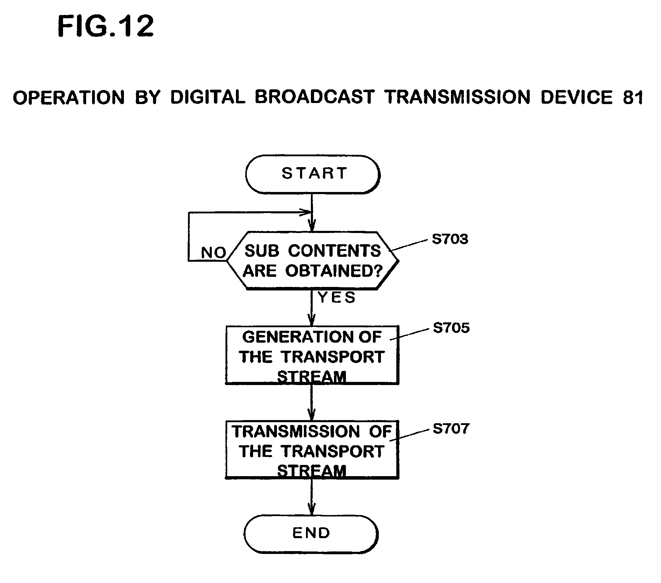

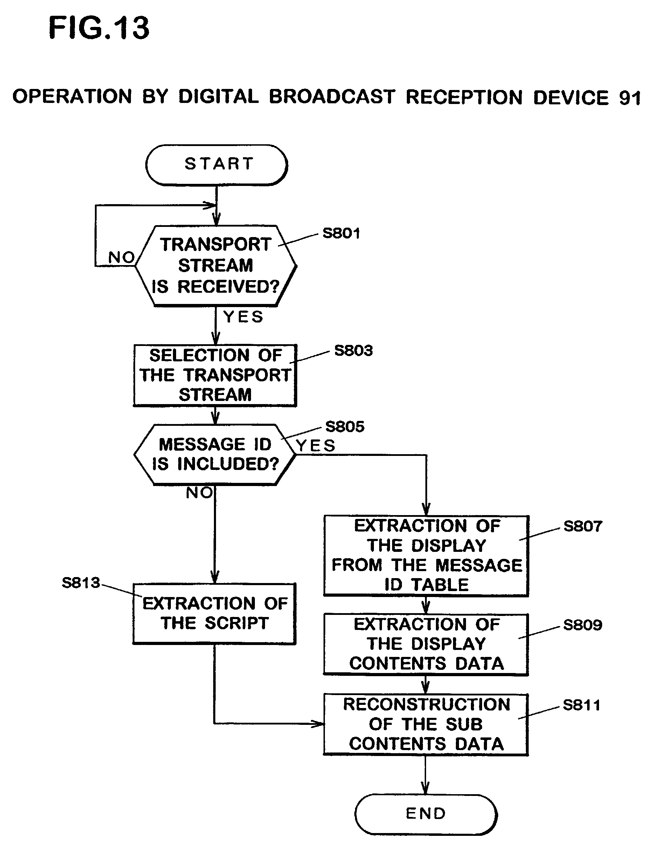

The multiplex portion executes the operation of step S705 and step S707 of the flowchart shown in Fig. 12. In addition, the reconstruction portion executes the operation of step S803-S811 of the flowchart shown in Fig. 13.

The relationship between the elements specified in the claims and the elements described in the embodiments are as follows. The transmission device corresponds to a digital broadcast transmission device 31. The reception device corresponds to a digital broadcast reception device 41. The multiplex portion corresponds to a CPU 310. The transmission portion corresponds to a transmission circuit 313. The reception portion corresponds to a reception circuit 413. The reconstruction portion corresponds to a CPU 410.

Furthermore, the output form ID corresponds to a message ID, and the output contents data corresponds to emergency information and commercial-related data.

The output form table corresponds to the reference table T1, T3 of the message ID and output form. The output form description portion corresponds to an output form description portion a3, and the output form ID description portion corresponds to a message ID description portion a1.

### BRIEF DESCRIPTION OF THE DRAWINGS

Fig. 1 is a block diagram of the functions of a first embodiment of the broadcast system according to the present invention.
Fig. 2 is a conceptual drawing of the broadcast system in the first embodiment.
Fig. 3 shows the hardware configuration of the digital broadcast transmission device 81 shown in Fig. 2.
Fig. 4 shows the hardware configuration of the digital broadcast reception device 91 shown in Fig. 2.
Fig. 5 shows the data structure of a reference tabe of the message ID and output form.
Fig. 6 shows an example of a reference table of the message ID and output form having the data structure of Fig. 5.
Fig. 7 shows an example of the relationship between representative situations in which each message ID is used, and the message ID.
Fig. 8 shows an example in which sub contents data sent by the digital broadcast transmission device 81 has been described by a script.
Fig. 9 shows the commercial displayed by the script in Fig. 8.
Fig. 10 shows an example in which sub contents data sent by the digital broadcast transmission device 81 has been described by a script.
Fig. 11 shows the commercial displayed by the script in Fig. 10.
Fig. 12 is a flowchart showing the actions of the CPU 310 of the digital broadcast transmission device 81.
Fig. 13 is a flowchart showing the actions of the CPU 410 of the digital broadcast reception device 91.
Fig. 14 is a brief illustration of case 1 of the first embodiment.
Fig. 15 shows changes in the screen of the display device 417 in case 1.
Fig. 16 shows changes in the screen of the display device 417 in case 1.
Fig. 17 is a conceptual drawing of the broadcast system in a second embodiment.
Fig. 18 shows a data structure of the reference table of the message ID and output form.
Fig. 19 shows an example of a reference table of the message ID and output form having the data structure of Fig. 18.
Fig. 20 shows an example in which sub contents data sent by the digital broadcast transmission device 31 has been described by a script.
Fig. 21 shows a screen in the case that emergency information is displayed on an existing broadcast system.
Fig. 22 shows an example of a conventional message ID table.
Fig. 23 is a constitutional diagram of a transmission device and a reception device in a conventional broadcast system.

### DESCRIPTION OF THE PREFERRED EMBODIMENTS

### [First Embodiment]

### 1. General Structure

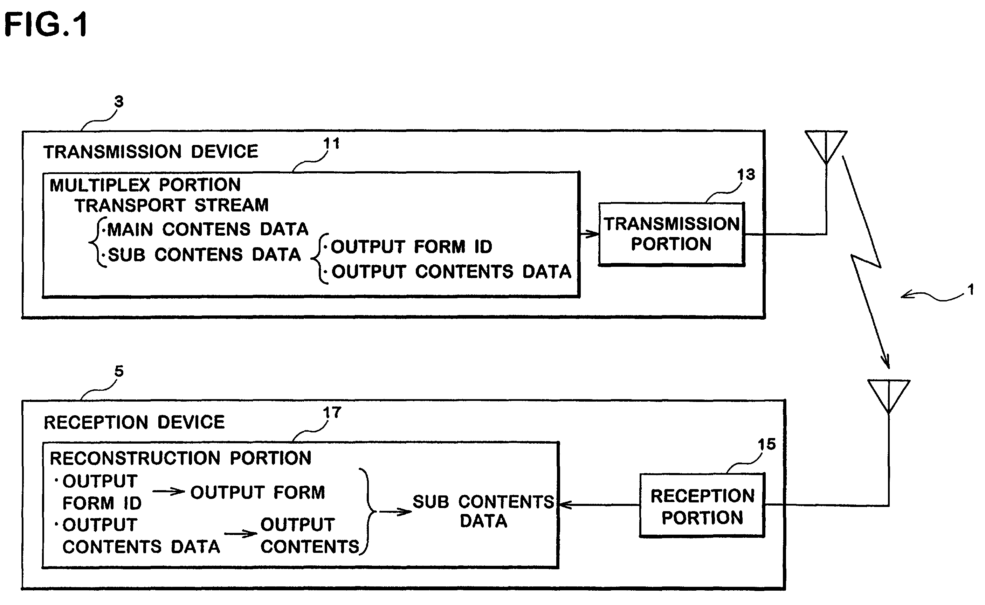

Fig. 1 is a functional block diagram of a broadcast system according to a first embodiment of the present invention. A broadcast system 1 includes a transmission device 3 and a reception device 5.

The transmission device 3 includes a multiplex portion 11 and a transmission portion 13. The reception device 5 includes a reception portion 15 and a reconstruction portion 17.

The multiplex portion 11 multiplies at least main contents data and sub contents data so as to generate a transport stream. The transmission portion 13 transmits the transport stream generated by the multiplex portion 11.

The reception portion 15 receives the transport stream transmitted by the transmission device 3. The reconstruction portion 17 determines an output form of the sub contents data in accordance with the output form that is predetermined for the output form ID in the received sub contents data and determines the output contents of the sub contents data in accordance with the output contents data in the received sub contents data, so as to perform the reconstruction control of the sub contents data.

In addition, an output form table describing the output form ID and the output form corresponding thereto is recorded in the reception device 5. Furthermore, the reception device 5 determines the output form of the sub contents in accordance with a predetermined output form when the received output form ID is not a predetermined one.

In addition, sub contents are emergency information.

The output form includes at least display position of the sub contents. Furthermore, the output form includes at least information about whether the sub contents are outputted or not. In addition, the output form includes at least an output time of the sub contents. In addition, the output form includes at least an output condition of the sub contents.

In addition, the reception device 5 determines the output form of the sub contents in accordance with a predetermined output form when the received output form ID is not a predetermined one.

Thus, a plurality of output contents data can be assigned to one output form ID.

### 2. Overview of the broadcast system

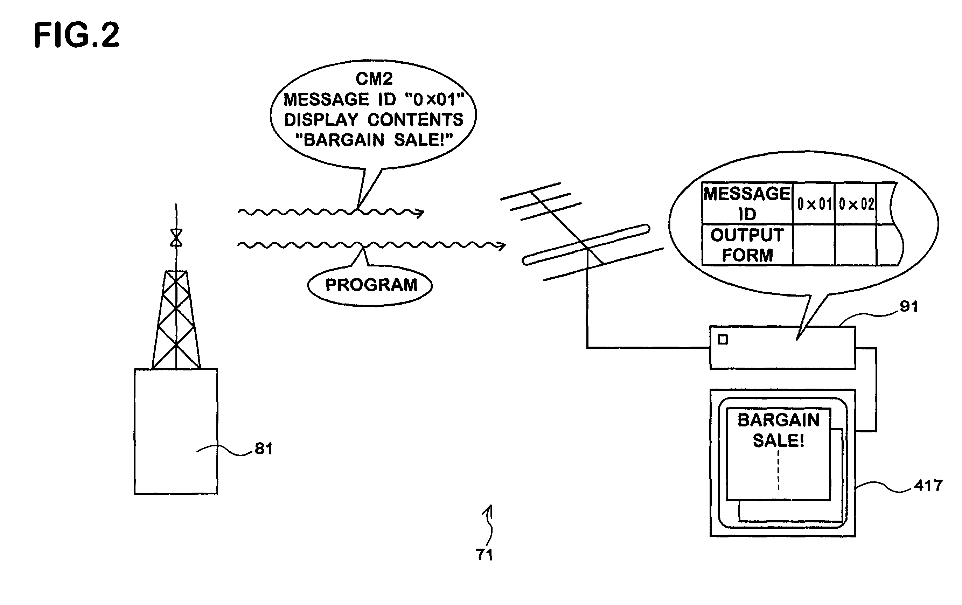

Fig. 2 shows an embodiment of the broadcast system shown in Fig. 1, which is a digital broadcast system 71 including a digital broadcast transmission device 81 and a digital broadcast reception device 91. Before the explanation of the digital broadcast system 71, a digital broadcast will be explained shortly.

### 2.1. Digital broadcast

At present, contents of the WWW (World Wide Web) are generally described in HTML (Hyper Text Markup Language). Such contents described in HTML (hereinafter, referred to as HTML format contents) can handle moving pictures and sounds simultaneously. In addition, using a script language such as JavaScript, an interactive operation can be realized.

It is studied to utilize the HTML format contents having such characteristics for a digital broadcast system. In this way, a program and information such as images, sounds or character information related to the program can be dealt with simultaneously. For example, the so-called digital multiplex broadcast can be realized by transmitting an HTML format contents about the program and the performers.

Furthermore, a digital broadcast system in which the transmission side transmits the HTML format contents about the program collectively, and the reception side memorizes the transmitted HTML format contents in a memory can provide an operation of getting data interactively.

By utilizing the digital broadcast, audiences can get information about the performers while watching the program, so as to understand the detail of the program or to enjoy the program more. Furthermore, since the interactive operation can be experienced, the system can support various needs of the audiences in detail.

### 2.2 Overview of the broadcast system of the present embodiment

The digital broadcast system 71 of the present embodiment will be described based on Fig. 2. The digital broadcast transmission device 81 transmits programs to each digital broadcast reception device 91, and also transmits commercials thereto. At this time, commercials are transmitted via the digital broadcast system 71 using event messages.

An event message is made up of a message ID consisting of alphanumeric characters and the like, and output content showing emergency information content.

When a digital broadcast reception device 91 receives an event message, the device determines the output form based on the message ID, then displays a commercial on a display device 417 based on the determined output form.

Thus, it is possible to switch between programs and commercials by sending and receiving commercials using event messages.

Hereinafter, the digital broadcast system 71 will be explained in detail. The digital broadcast system 71 is to be based on MPEG2 standard, DSM-CC standard, DVB-SI standard and BML standard (the standard related to the data broadcasting in the BS digital broadcasting).

The MPEG2 standard is described in ISO/IEC13818-1 and ISO/IEC13818-2. DSM-CC standard is described in ISO/IEC13818-6. Furthermore, DVB-SI standard is described in ETSI ETS 300 468 (ARIB STD-B10 Version 1.2 in Japan), and BML standard is described in ARIB STD-B24 Version 1.1.

### 3. Hardware structure

### 3.1. Hardware structure of the digital broadcast transmission device 81

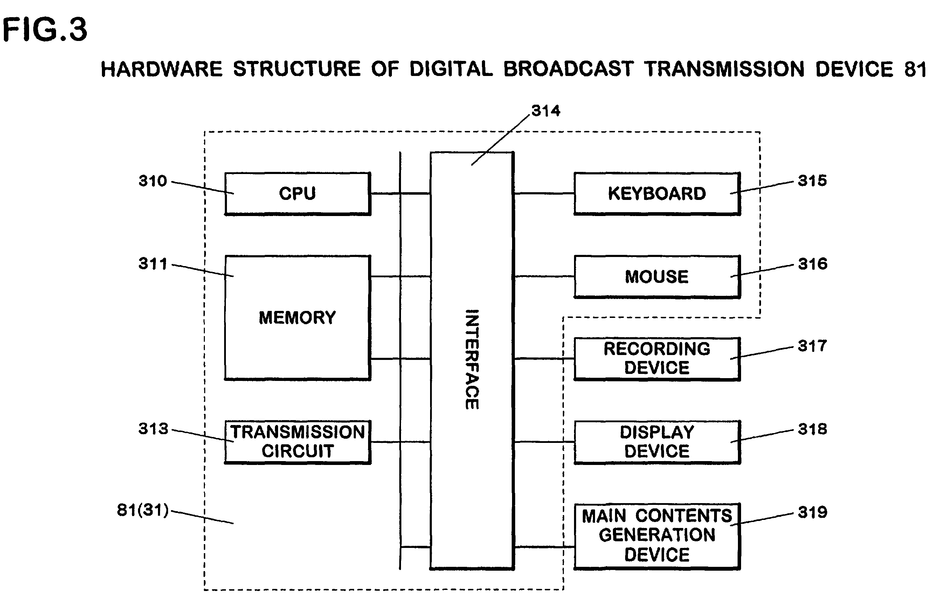

Fig. 3 shows a hardware structure of the digital broadcast transmission device 81. The digital broadcast transmission device 81 includes a CPU 310 for processing operations such as generation of the transport stream or control of each portion, a memory 311 for used for working area of the CPU 310, a transmission circuit 313 for transmitting the generated transport stream externally, an interface 314 for controlling the input and the output between the CPU 310 and the external equipment, and a keyboard 315 and a mouse 316 as input means for an operator to input characters and instructions. The memory 311 stores a program for controlling the operation of the CPU 310.

The digital broadcast transmission device 81 is connected to external equipment such as a recording device 317, a display device 318 and a main contents generation device 319. The recording device 317 records digital data and may be composed of a hard disk drive or a floppy disk drive. The display device 318 displays main contents data and sub contents data. The main contents generation device 319 generates main contents and may be a video camera or an image edit device for editing an image obtained by a video camera.

### 3.2. Hardware structure of the digital broadcast reception device 91

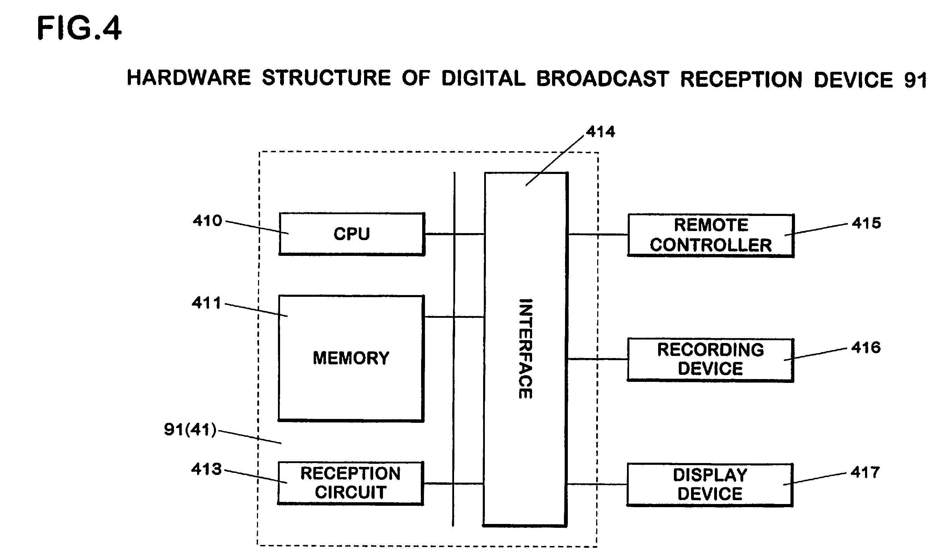

Fig. 4 shows a hardware structure of the digital broadcast reception device 91. The digital broadcast reception device 91 includes a CPU 410 for processing operations such as selection of the transport stream or occasional decision whether a unique event message is transmitted or not, a memory 411 for memorizing a program for controlling the operation of the CPU 410 and for used for working area of the CPU 410, a reception circuit 413 for receiving a transport stream externally and an interface 414 for controlling input and output between the CPU 410 and the external equipment. The memory 411 memorizes a program for controlling the operation of the CPU 410 and a reference table T3 of the message ID and the output form that will be explained later.

The digital broadcast reception device 91 is connected to a remote controller 415, a recording device 416 and a display device 417 as the external equipment. The remote controller 415 transmits and receives signals for operating the contents that are displayed on the display device 417. The recording device 416 records digital data, and may be a hard disk drive or a floppy disk drive. The display device 417 displays at least the main contents data and the sub contents data.

### 4. Main contents data and sub contents data

Hereinafter, the main contents data and the sub contents data will be explained.

### 4.1. Main contents data

The main contents data means data to be a heart in the broadcast. For example, the above-mentioned program (such as dramas, varieties or news) or the HTML format contents correspond the main contents data.

The generation of the main contents data is the same as the generation of the picture and sounds in the conventional television broadcast system or the generation of web contents in the WWW. Accordingly, a detailed explanation about the generation of the main contents data is omitted.

### 4.2. Sub contents data

The sub contents data means data except the main contents data such as the above-mentioned commercial.

In this embodiment, the commercial is regarded as the sub contents data. The event message is used for transmission and reception of the commercial. When the commercial is transmitted, the output contents including the message ID and the contents of the commercial are multiplexed on the usual program.

Concerning the output contents, the contents generator of the commercial describes the contents in the script format. In this way, by describing the output contents in the script format, the contents generator can generate the contents freely.

On the other hand, when the commercial is received, a output form that matches the received message ID is extracted from the reference table T3 of the message ID and the output form. The received output contents are displayed in accordance with the extracted output form.

Hereinafter, the message ID and the script will be explained.

### 4.2.1 Message ID and reference table of the message ID and the output form

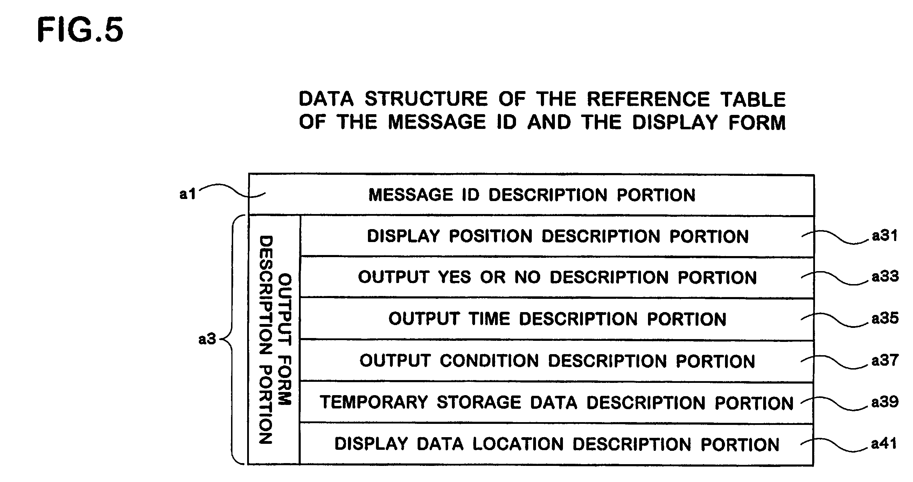

Fig. 5 shows a data structure of the reference table of the message ID and the output form memorized in the memory 411. In the message ID table of the conventional event message (see Fig. 22), output contents and output form are defined for each message ID. However, in the reference table of the message ID and the output form of the event message of this embodiment, only a output form is defined for each message ID.

The reference table of the message ID and the output form consists of a message ID description portion a1 and an output form description portion a3. The output form description portion a3 includes a display position description portion a31 that describes the display position of the sub contents, an output yes or no description portion a33 that describes whether the sub contents are outputted or not, an output time description portion a35 that describes the output time of the sub contents, an output condition description portion a37 that describes the output condition of the sub contents, and a temporary storage data description portion a39 that indicates what data is to be temporarily stored in the memory 411, as well as a display data location description portion a41 that indicates what data is to be output.

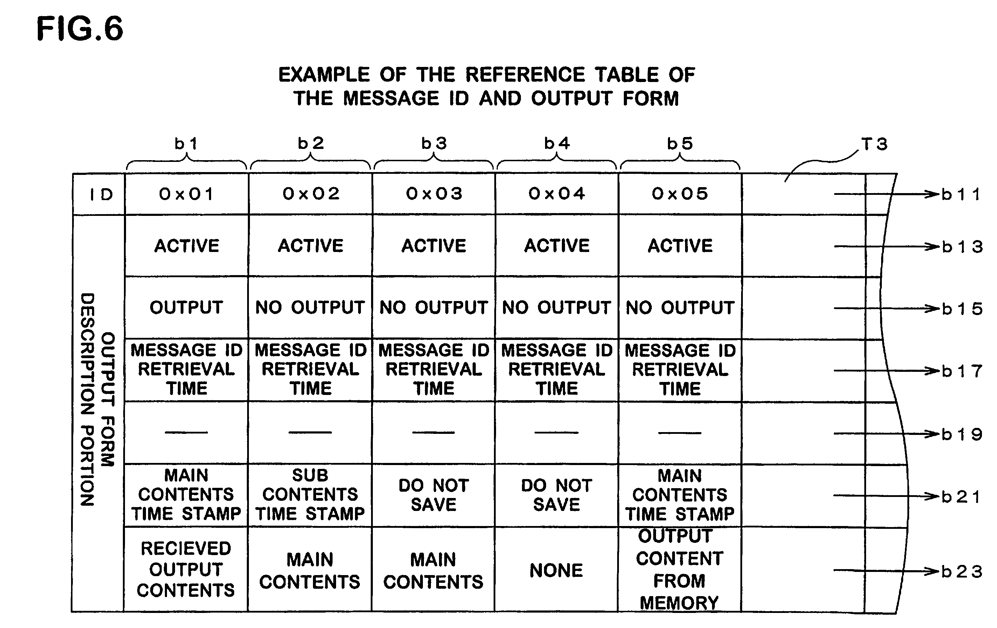

Fig. 6 shows an example of the reference table T3 of the message ID and the output form having the above-mentioned data structure. The reference table T3 of the message ID and the output form includes blocks b1, b2 , b3,... corresponding to each message ID.

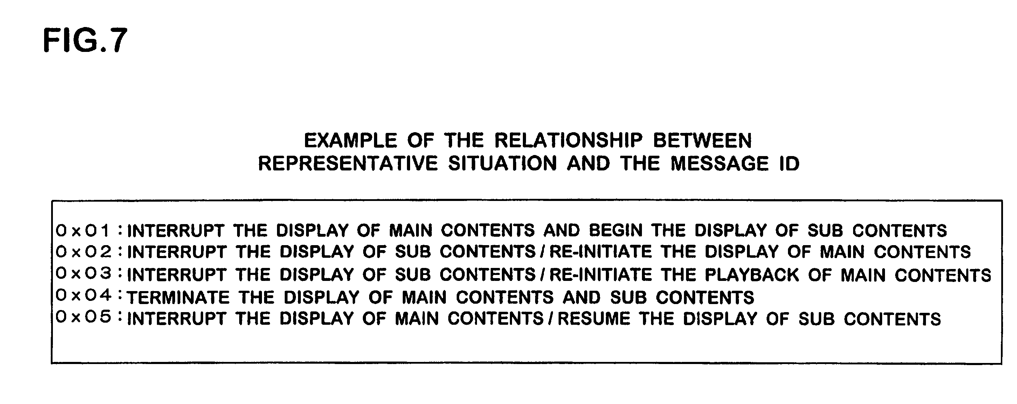

Here, an example of the relationship between representative situations in which each message ID is used and the message ID is shown in Fig. 7.

Message ID "0x01" is used to switch from the display of main contents being displayed on the display device 417 to display sub contents. That is, it is used to interrupt the display of main contents and begin the display of sub contents. Consequently, when a digital broadcast reception device 91 receives a "0x01" message ID it must perform the following actions.

"When the message ID is retrieved", "the current time stamp of the main contents (data indicating the amount of time played from the beginning of the content)" is temporarily stored in the memory 411, and "the output content data of the received sub contents" is output to "the window active at that time" "without adding" any flashing or other effects to the output content.

The "0x01" message ID needs to execute this action on a digital broadcast reception device 91. When this message ID is written in a message ID table, the following data is stored in block b1: "0x01" is stored in area b11, which corresponds to the output form description portion; "active" is stored in area b13, which corresponds to the display position description portion; "output" is stored in area b15, which corresponds to the output yes or no description portion; "message ID retrieval time" is stored in area b17, which corresponds to the output time description portion; "- (none)" is stored in area b19, which corresponds to the output conditions description portion; "main contents time stamp" is stored in area b21, which corresponds to the temporary storage data description portion; and "received output content" is stored in area b23, which corresponds to the display data location description portion.

Below, the message IDs "0x02," "0x03," "0x04," and "0x05" shown in Fig. 12 will be described in the same manner. Message ID "0x02" is used to interrupt the display of sub contents being displayed on the display device 417, and re-initiate the playback of main contents that was being displayed previously. Consequently, when a digital broadcast reception device 91 receives a "0x02" message ID it must perform the following actions.

"When the message ID is retrieved", "the current time stamp of the sub contents in the memory 411" is temporarily stored, and "the main content" is "output" to "the window active at that time" based on the time stamp stored in the memory 411 indicating the last interrupt time "without adding" any flashing or other effects to the output content.

The "0x02" message ID needs to execute this action on a digital broadcast reception device 91. When this message ID is written in a message ID table, the following data is stored in block b2: "0x02" is stored in area b11, which corresponds to the output form description portion; "active" is stored in area b13, which corresponds to the display position description portion; "no output" is stored in area b15, which corresponds to the output yes or no description portion; "message ID retrieval time" is stored in area b17, which corresponds to the output time description portion; "- (undefined)" is stored in area b19, which corresponds to the output conditions description portion; "sub contents time stamp" is stored in area b21, which corresponds to the temporary storage data description portion; and "main content" is stored in area b23, which corresponds to the display data location description portion.

Message ID "0x03" is used to terminate the display of sub contents being displayed on the display device 417, and re-initiate the playback of main contents that was being displayed before. Consequently, when a digital broadcast reception device 91 receives a "0x03" message ID it must perform the following actions.

"When the message ID is retrieved", the display of sub contents is terminated, and "the main content" is "output" to "the window active at that time" based on the main contents time stamp stored in the memory 411 "without adding" any flashing or other effects to the output content.

The "0x03" message ID needs to execute this action on a digital broadcast reception device 91. When this message ID is written in a message ID table, the following data is stored in block b3: "0x03" is stored in area b11, which corresponds to the output form description portion; "active" is stored in area b13, which corresponds to the display position description portion; "no output" is stored in area b15, which corresponds to the output yes or no description portion; "message ID retrieval time" is stored in area b17, which corresponds to the output time description portion; "- (undefined)" is stored in area b19, which corresponds to the output conditions description portion; "do not save" is stored in area b21, which corresponds to the temporary storage data description portion; and "main content" is stored in area b23, which corresponds to the display data location description portion.

Message ID "0x04" is used to terminate the display of main contents and sub contents being displayed on the display device 417. Consequently, when a digital broadcast reception device 91 receives a "0x04" message ID it must perform the following actions.

"When the message ID is retrieved", the display of content to "the window active at that time" is terminated.

The "0x04" message ID needs to execute this action on a digital broadcast reception device 91. When this message ID is written in a message ID table, the following data is stored in block b4: "0x04" is stored in area b11, which corresponds to the output form description portion; "active" is stored in area b13, which corresponds to the display position description portion; "no output" is stored in area b15, which corresponds to the output yes or no description portion; "message ID retrieval time" is stored in area b17, which corresponds to the output time description portion; "- (undefined)" is stored in area b19, which corresponds to the output conditions description portion; "do not save" is stored in area b21, which corresponds to the temporary storage data description portion; and "none" is stored in area b23, which corresponds to the display data location description portion.

Message ID "0x05" is used to switch from the display of main contents being displayed on the display device 417, to display previously received sub contents. That is, it is used to interrupt the display of main contents and resume the display of sub contents that had been previously received. Consequently, when a digital broadcast reception device 91 receives a "0x05" message ID it must perform the following actions.

"When the message ID is retrieved", "the current time stamp of the main content" is temporarily stored in the memory 411, and "the output content data of the sub contents stored in the memory 411" is output to "the window active at that time" "without adding" any flashing or other effects to the output content.

The "0x05" message ID needs to execute this action on a digital broadcast reception device 91. When this message ID is written in a message ID table, the following data is stored in block b5: "0x05" is stored in area b11, which corresponds to the output form description portion; "active" is stored in area b13, which corresponds to the display position description portion; "no output" is stored in area b15, which corresponds to the output yes or no description portion; "message ID retrieval time" is stored in area b17, which corresponds to the output time description portion; "- (none)" is stored in area b19, which corresponds to the output conditions description portion; "main contents time stamp" is stored in area b21, which corresponds to the temporary storage data description portion; and "output content from memory" is stored in area b23, which corresponds to the display data location description portion.

In this way, message IDs and their corresponding output forms are stored in the reference table T3 of the message ID and output form. Note that the reference table T3 of the message ID and output form is stored in memory 411 of the digital broadcast reception device 91.

### 4.2.2 Output content

With regard to the present embodiment, output content is data relating to commercials. For example, this data may be a commercial consisting of mixed images and sound, as in conventional television broadcasts, or it may be an image like the banner advertisements contained in Web content. Furthermore, it may also consist solely of text characters made up of text data. This type of commercial generation can apply existing commercial generation methods, and so the generation process will be omitted here.

### 4.2.3 Scripts

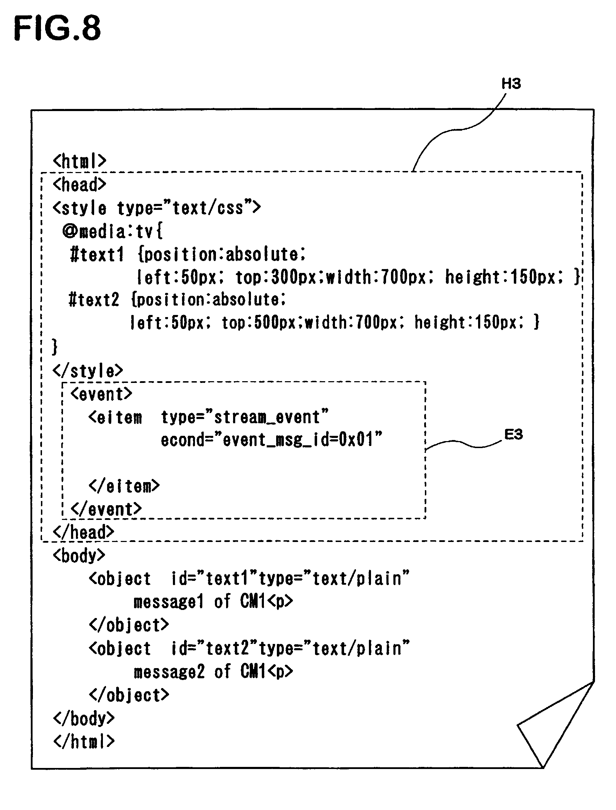

Fig. 8 shows an example of self description-type data in the case where a commercial is displayed on a display device 417 using the above-mentioned message IDs. The content generator writes the message ID to the head portion H3 specified by the 〈head〉 ... 〈/head〉 self description-type data tags.

The message ID is written to the event_msg_id in the event description portion E3 specified by the 〈event〉 ... 〈/event〉 tags in the head portion H3.

Additionally, the entire script is written, specifying the commercial content - which is the output content - to be displayed in the display area, via the 〈html〉 ... 〈/html〉 tags. More specifically, @media: within the 〈style〉 ... 〈/style〉 tags describes what type of media to display thereto. In Fig. 8, a commercial is to be displayed on television, so the descriptor is @media:tv. #text1 and #text2 specify the position in which text is to be displayed in the commercial. The text to be displayed in the commercial is described within 〈body〉 ... 〈/body〉.

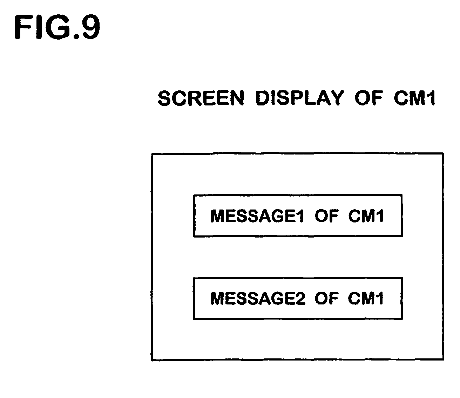

The commercial displayed by this script (hereinafter "CM1") is shown in Fig. 9.

The present embodiment is a broadcast system capable of displaying a commercial even with an output form not defined in the reference table T3 of the message ID and output form.

In order to display a commercial in an output form not defined with a message ID in the reference table T3 of the message ID and output form, a script containing a message ID not defined in the reference table T3 of the message ID and output form is sent from the broadcaster.

When the CPU 410 of the digital broadcast reception device 91 retrieves a message ID not defined in the reference table T3 of the message ID and output form, it displays the commercial based on the retrieved script. Note that in this case, the script must describe the output form with which to display the commercial on the display device 417.

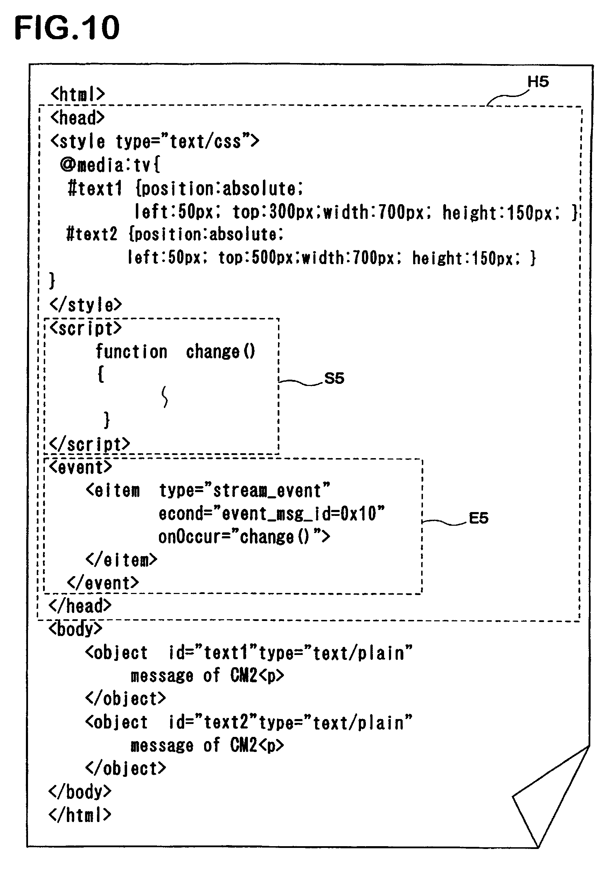

Fig. 10 shows a sample script of this type. The content generator writes the message ID in the head portion H5 specified by the 〈head〉 ... 〈/head〉 self description-type data tags.

The message ID is written to the event_msg_id in the event description portion E5 specified by the 〈event〉 ... 〈/event〉 tags in the head portion H5.

Additionally, the entire script is written, specifying the commercial - which is the output content - to be displayed in the display area, via the 〈html〉 ... 〈/html〉 tags. More specifically, @media: within the 〈style〉 ... 〈/style〉 tags describes what type of media to display. In Fig. 10, a commercial is to be displayed on television, so the descriptor is @media:tv. #text1 and #text2 specify the position in which text is to be displayed in the commercial. The text to be displayed in the commercial is written within 〈body〉 ... 〈/body〉.

Furthermore, the output form with which to display the commercial on the display device 417 is defined by the change() function, in the script description portion S5, specified by the 〈script〉 ... 〈/script〉 tags. In the present embodiment, the change() function contains a script which opens a new window, and displays the contents of the commercial in that window. Note that a concrete description of the change() function is omitted from Fig. 10.

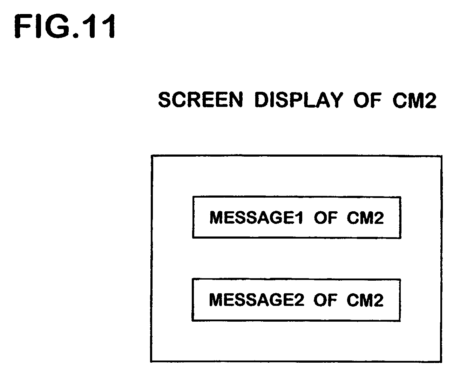

The commercial displayed by this script (hereinafter "CM2") is shown in Fig. 11.

### 4.3. Flowchart

Next, the operation of the digital broadcast transmission device 81 having the above-mentioned structure and the digital broadcast reception device 91 will be explained. Fig. 12 shows a flowchart of the operation performed by the CPU 310 of the digital broadcast transmission device 81. Fig. 13 shows a flowchart of the operation performed by the CPU 410 of the digital broadcast reception device 91.

The operation of the CPU 310 of the digital broadcast transmission device 81 will be explained with reference to Fig. 12. When an commercial is transmitted, the contents generator generates sub contents data for transmitting the commercial, by using the script. The generated sub contents data that are described in the script are given to the digital broadcast transmission device 81. The CPU 310 decides whether the sub contents data are obtained or not (S703). Until the sub contents data are obtained, it is in the waiting state.

The decision whether the sub contents data are obtained or not can be replaced with an automatic decision by the digital broadcast transmission device 81. Furthermore, when the sub contents data are obtained, verification that it is the sub contents data can be required to the user so as to decide that the data are obtained when the verification is obtained.

When the sub contents data are obtained, the main contents data that are being transmitted and the obtained sub contents data are multiplexed so as to generate the transport stream (S705). Then, the generated transport stream is transmitted (S707). When the transport stream is transmitted to each home finally, the transport stream is made into packets. Furthermore, the packets of transport stream are transmitted in accordance with a transmission protocol defined in the digital broadcast.

Next, the operation of the CPU 410 of the digital broadcast reception device 91 will be explained with reference to Fig. 13. The CPU 410 decides whether the packets of the transport stream repeatedly transmitted by the broadcasting station in accordance with the transmission rule are received or not (S801). If the packets of the transport stream are not received, the CPU becomes waiting state until it is received.

If the packets of the transport stream are received, the packet that is the object to be selected (i.e., the packet that includes sub the contents data) is selected from the received transport stream in accordance with a predetermined selection condition (S803).

It is decided whether the selected packet includes a predetermined message ID or not (S805). For this decision, the reference table T3 of the message ID and the output form recorded in the memory 411 of the digital broadcast reception device 91 is referred.

If the predetermined message ID is included, the output form that corresponds to the message ID Is extracted from the reference table T3 of the message ID and the output form (S807).

In addition, the output contents data are extracted in accordance with the self description type data included in the packet that has been selected in step S803 (S809). Then, the sub contents data are reconstructed in accordance with the output form that has been extracted in step S807 and the output contents data that have been extracted in step S809 (S811).

After that, the reconstructed sub contents data are transmitted to the display device 417, so that the sub contents data are displayed on the display device 417.

If the predetermined message ID is not received in step S805, the script for displaying the sub contents data is extracted from the self description type data stored in the packet that has been selected in step S803 (S813). Then, the sub contents data are reconstructed in accordance with the extracted script (S811).

### 4.4 Example of switch between program and commercial

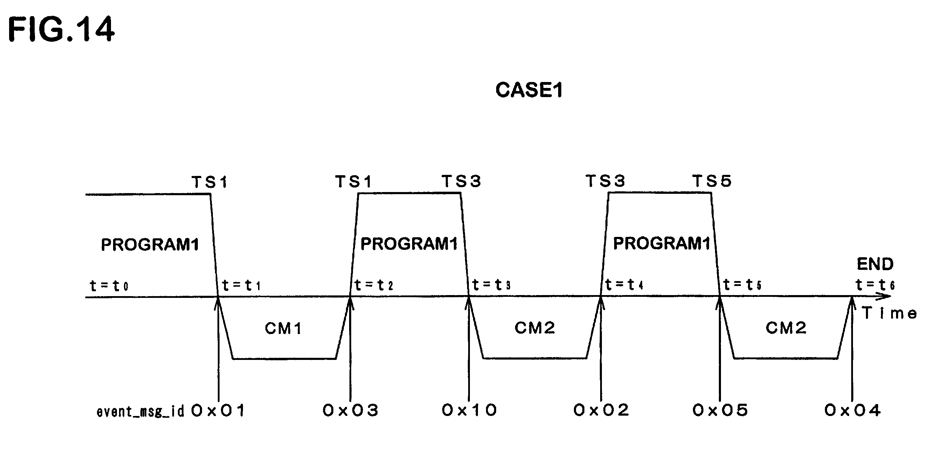

Next is given an actual example of how to switch between a program and a commercial, making reference a case 1 as shown in Fig. 14.

### 4.4.1 Case 1 (see Fig. 14)

from t=t0 to t=t1, broadcast program 1
from t=t1 to t=t2, broadcast CM1
from t=t2 to t=t3, broadcast program 1
from t=t3 to t=t4, broadcast CM2
from t=t4 to t=t5, broadcast program 1
from t=t5 to t=t6, broadcast CM2
at t=t6, terminate broadcast

### 4.4.2 Time t=t0 to Time t=t1

Assume that program 1, which is the main content, is already being broadcast at time t=t0. In the case that the broadcaster attempts to broadcast CM1 as the output content data in the sub contents at time t=t1, the broadcaster uses the digital broadcast transmission device 81 to multiplex the script containing message ID "0x01" (hereinafter, "CM1 script") into data for the program 1, and sends it to ordinary households.

When the digital broadcast reception device 91 in each household receives the CM1 script, it extracts the "0x01" message ID therefrom. The device then determines the output form corresponding to message ID "0x01" based on the reference table T3 of the message ID and output form (see Fig. 6) stored in the memory 411.

CM1 is displayed on the display device 417 based on the determined output form. In addition, at the time when CM1 is displayed, the time stamp (TS1) of program 1 is temporarily stored in a predetermined area of the memory 411.

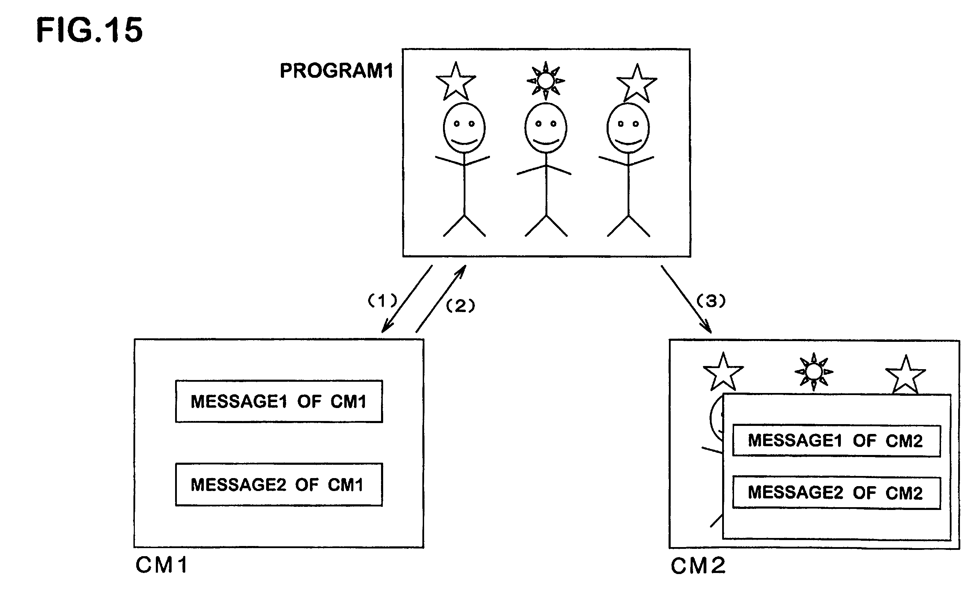

The change to the screen of the display device 417 at this time is shown in Fig. 15. As shown by arrow (1), the screen switches from program 1 to CM1.

### 4.4.3 Time t=t2 to Time t=t3

In the case that the broadcaster attempts to terminate the broadcast of CM1 as the output content data in the sub contents at time t=t2, the broadcaster uses the digital broadcast transmission device 81 to multiplex the message ID "0x03" into data for the program 1, and sends it to ordinary households. At this time, the output content is not defined, and the content consists of empty data.

When the digital broadcast reception device 91 in each household receives the "0x03" message ID, the device determines the output form corresponding to message ID "0x03" based on the reference table T3 of the message ID and output form stored in the memory 411.

Since the output content data was never defined, there was never any data to display. In some cases, output content data may be defined, but with message ID "0x03" no output content data is displayed by the corresponding output form. Then, the program 1 broadcast is resumed, based on the time stamp (TS1) stored in the memory 417, showing the time at which the program was interrupted.

Note that while CM1 is being broadcast, the data for program 1 is being delivered, and the digital broadcast reception device 91 is receiving this data. This data is stored in a predetermined location of the memory 411. When the halt on program 1 is released, and its broadcast is resumed, data for the program 1 stored in the memory 411 is used therefor.

The change to the screen of the display device 417 at this time is shown in Fig. 15. As shown by arrow (2), the screen switches from CM1 to program 1.

### 4.4.4 Time t=t3 to Time t=t4

Here is examined the case where the broadcaster attempts to broadcast a new CM2 as the output content data in the sub contents at time t=t3. Note that this example will assume that CM2 will not be displayed with an output form defined by a message ID, and that instead it will be displayed with another output form.

Furthermore, it will be assumed that the broadcaster displays CM2 in a separate window from the one in which program 1 is being displayed. In this case, the broadcaster uses the digital broadcast transmission device 81 to multiplex a script (hereinafter "CM2 script") into data for the program 1, and sends it to ordinary households.

When the digital broadcast reception device 91 in each household receives the CM2 script, it extracts the "0x01" message ID therefrom. However, the CM2 script does not contain a message ID defined in the reference table T3 of the message ID and output form. So at this time, the digital broadcast reception device 91 extracts the output form from the received CM2 script. The device then displays CM2 on the display device 417 based on the extracted output form. Additionally, the time stamp (TS3) when CM2 is being displayed for program 1, i.e., showing the time at which the program 1, was interrupted is temporarily stored in a predetermined location in the memory 417.

The change to the screen of this display device 417 at this time is shown in Fig. 15. As shown by arrow (3), the screen switches from program 1 to CM2, which is displayed in a different window from the program 1.

### 4.4.5 Time t=t4 to Time t=t5

In the case that the broadcaster attempts to temporarily interrupt the broadcast of CM2 at time t=t4, as with the case of terminating CM1, the broadcaster uses the digital broadcast transmission device 81 to multiplex message ID "0x02" into data for the program 1, and sends it to ordinary households. At this time, no output content data is recorded.

When the digital broadcast reception device 91 in each household receives the "0x02" message ID, the device determines the output form corresponding to message ID "0x02" based on the reference table T3 of the message ID and output form stored in the memory 411.

Since the output content data was never defined, there was never any data to be displayed. In some cases, output content data may be defined, but with message ID "0x02" no output content data is displayed by the corresponding output form. Then, the program 1 broadcast is resumed, based on the time stamp (TS3) for the main contents stored in the memory 411.

At this time, the CM2 data received, including CM2's output form, is stored in the memory 411.

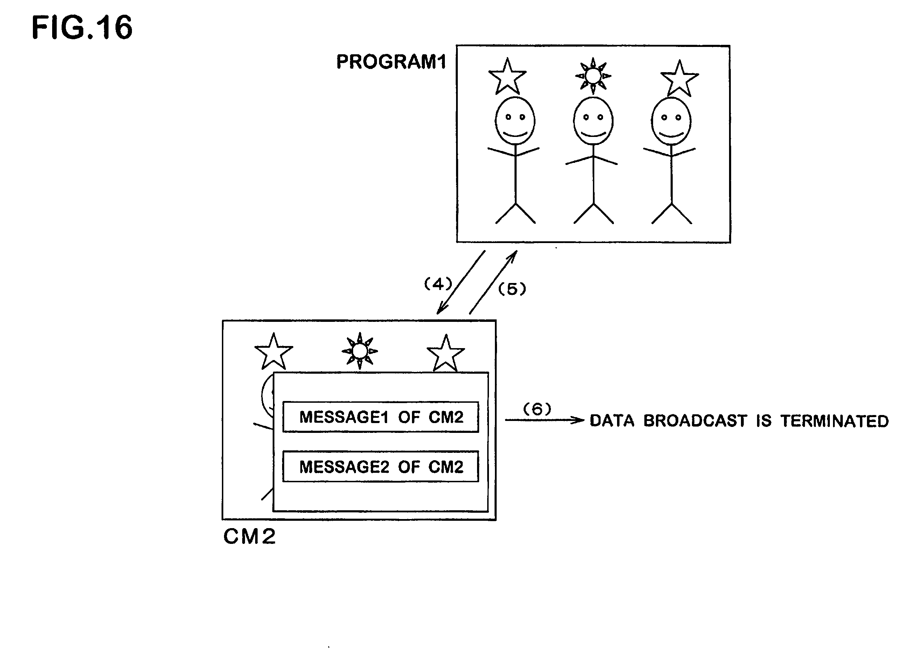

The change to the screen of this display device 417 at this time is shown in Fig. 16. As shown by arrow (5), the screen switches from CM2, which had been displayed in a separate window from the program 1, to the program 1.

### 4.4.6 Time t=t5 to Time t=t6

Assume that the broadcaster attempts to resume the broadcast of CM2, which had been interrupted, at time t=t5. In this case, the broadcaster uses the digital broadcast transmission device 81 to multiplex the message ID "0x05" into data for the program 1, and sends it to ordinary households.

When the digital broadcast reception device 91 in each household receives the "0x05" message ID, the device displays CM2 to the display device 417, based on the CM2 data stored in the memory 411 when it was interrupted the previous time.

The change to the screen of this display device 417 at this time is shown in Fig. 16. As shown by arrow (4), the screen switches from the program 1 to CM2, in a separate window from that of the program 1.

Then when message ID "0x04" is received, the display of CM2 is terminated, as well as the data broadcast, based on the reference table T3 of the message ID and output form (see Fig. 16, arrow (6)).

These actions allow the digital broadcast system 71 to control two states: it can refer to commercials during programs, via the message ID types, and it is possible to run scripts in accordance with the content description. This makes it possible to reduce the processing load on the CPU.

Furthermore, during content creation it is possible to realize outstanding functions without any need for the support of authoring tools.

### [SECOND EMBODIMENT]

### 1. OVERALL CONSTITUTION

The overall constitution of the present embodiment is the same as that of the first embodiment. In the present embodiment, however, the sub contents is emergency information.

### 2. Overview of the broadcast system

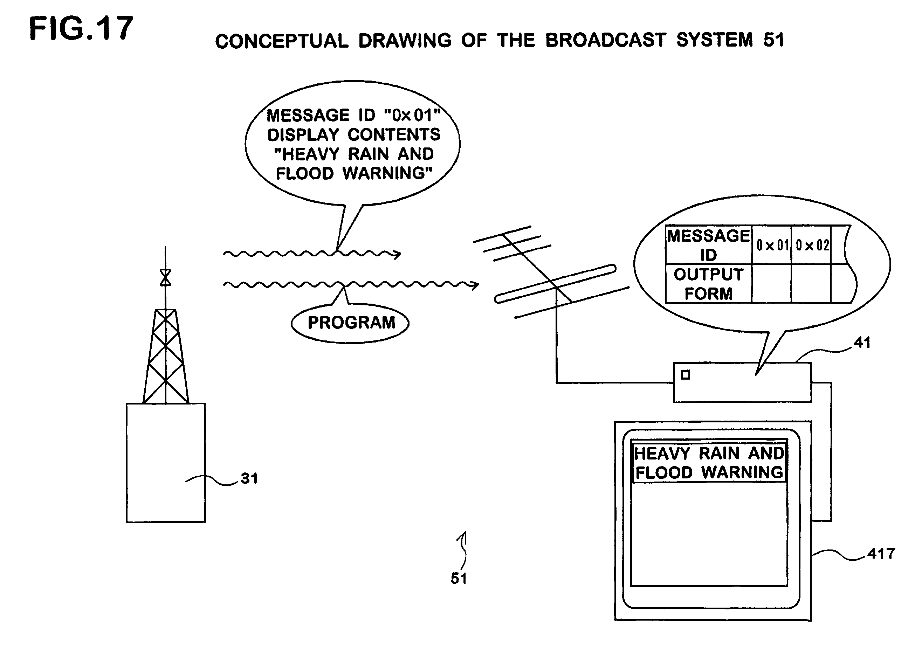

Fig. 17 shows an embodiment of the broadcast system shown in Fig. 1, which is a digital broadcast system 51 including a digital broadcast transmission device 31 and a digital broadcast reception device 41. Before the explanation of the digital broadcast system 51, a digital broadcast will be explained shortly.

### 2.1. Digital broadcast

At present, contents of the WWW (World Wide Web) are generally described in HTML (Hyper Text Markup Language). Such contents described in HTML (hereinafter, referred to as HTML format contents) can handle moving pictures and sounds simultaneously. In addition, using a script language such as JavaScript, an interactive operation can be realized.

It is studied to utilize the HTML format contents having such characteristics for a digital broadcast system. In this way, a program and information such as images, sounds or character information related to the program can be dealt with simultaneously. For example, the so-called digital multiplex broadcast can be realized by transmitting an HTML format contents about the program and the performers.

Furthermore, a digital broadcast system in which the transmission side transmits the HTML format contents about the program collectively, and the reception side memorizes the transmitted HTML format contents in a memory can provide an operation of getting data interactively.

By utilizing the digital broadcast, audiences can get information about the performers while watching the program, so as to understand the detail of the program or to enjoy the program more. Furthermore, since the interactive operation can be experienced, the system can support various needs of the audiences in detail.

### 2.2. Overview of the digital broadcast system 51 according to the present invention

The digital broadcast transmission device 31 transmits the number to each digital broadcast reception device 41 and transmits emergency information when an emergency situation has occurred. The digital broadcast system 51 transmits an event message when transmitting the emergency information.

The event message consists of a message ID made of numerals and characters and output contents indicating the contents of the emergency information.

The digital broadcast reception device 41 that has received the event message determines the output form in accordance with the message ID. The output form defines rules for displaying the output contents on the display device 417. Then, the output contents are displayed by the display device 417 in accordance with the determined output form.

Hereinafter, the digital broadcast system 51 will be explained in detail. The digital broadcast system 51 is to be based on MPEG2 standard, DSM-CC standard, DVB-SI standard and BML standard (the standard related to the data broadcasting in the BS digital broadcasting).

The MPEG2 standard is described in ISO/IEC13818-1 and ISO/IEC13818-2. DSM-CC standard is described in ISO/IEC13818-6. Furthermore, DVB-SI standard is described in ETSI ETS 300 468 (ARIB STD-B10 Version 1.2 in Japan), and BML standard is described in ARIB STD-B24 Version 1.1.

### 3. Hardware structure

### 3.1. Hardware structure of the digital broadcast transmission device 31

Fig. 3 shows a hardware structure of the digital broadcast transmission device 31. The digital broadcast transmission device 31 includes a CPU 310 for processing operations such as generation of the transport stream or control of each portion, a memory 311, a transmission circuit 313 for transmitting the generated transport stream externally, an interface 314 for controlling the input and the output between the CPU 310 and the external equipment, and a keyboard 315 and a mouse 316 as input means for an operator to input characters and instructions. The memory 311 stores a program for controlling the operation of the CPU 310.

The digital broadcast transmission device 31 is connected to external equipment such as a recording device 317, a display device 318 and a main contents generation device 319. The recording device 317 records digital data and may be composed of a hard disk drive or a floppy disk drive. The display device 318 displays main contents data and sub contents data. The main contents generation device 319 generates main contents and may be a video camera or an image edit device for editing an image obtained by a video camera.

### 3.2. Hardware structure of the digital broadcast reception device 41

Fig. 4 shows a hardware structure of the digital broadcast reception device 41. The digital broadcast reception device 41 includes a CPU 410 for processing operations such as selection of the transport stream or occasional decision whether a unique event message is transmitted or not, a memory 411 for memorizing a program for controlling the operation of the CPU 410 and for used for working area of the CPU 410, a reception circuit 413 for receiving a transport stream externally and an interface 414 for controlling input and output between the CPU 410 and the external equipment. The memory 411 memorizes a program for controlling the operation of the CPU 410 and a reference table of the message ID and the output form that will be explained later.

The digital broadcast reception device 41 is connected to a remote controller 415, a recording device 416 and a display device 417 as the external equipment. The remote controller 415 transmits and receives signals for operating the contents that are displayed on the display device 417. The recording device 416 records digital data, and may be a hard disk drive or a floppy disk drive. The display device 417 displays at least the main contents data and the sub contents data.

### 4. Main contents data and sub contents data

In the conventional broadcast system, a transmission side (generally a TV station) usually transmits programs. However, if an emergency situation such as a change of the meteorological information or an event has occurred, an emergency Information is transmitted along with the normal program.

The transmission of the emergency information is the same in the digital broadcast system. Namely, in the digital broadcast system 51, a program and HTML format contents about the program are usually transmitted. However, when an emergency situation occurs, an emergency information is required to be transmitted along with the normal program and the HTML format contents.

### 4.1. Main contents data

The main contents data means data to be a heart in the broadcast. For example, the above-mentioned program (such as dramas, varieties or news) or the HTML format contents correspond the main contents data.

The generation of the main contents data is the same as the generation of the picture and sounds in the conventional television broadcast system or the generation of web contents in the WWW. Accordingly, a detailed explanation about the generation of the main contents data is omitted.

### 4.2. Sub contents data

The sub contents data means data except the main contents data such as the above-mentioned emergency information.

In this embodiment, the emergency information is regarded as the sub contents data. The event message is used for transmission and reception of the emergency information. When the emergency information is transmitted, the output contents including the message ID and the contents of the emergency information are multiplexed on the usual program.

Concerning the output contents, the contents generator of the emergency Information describes the contents in the script format. In this way, by describing the output contents in the script format, the contents generator can generate the contents freely.

On the other hand, when the emergency information is received, a output form that matches the received message ID is extracted from the reference table of the message ID and the output form. The received output contents are displayed in accordance with the extracted output form.

Hereinafter, the message ID, the reference table T1 of the message ID and the output form and the output contents will be explained.

### 4.2.1 Message ID and reference table of the message ID and the output form

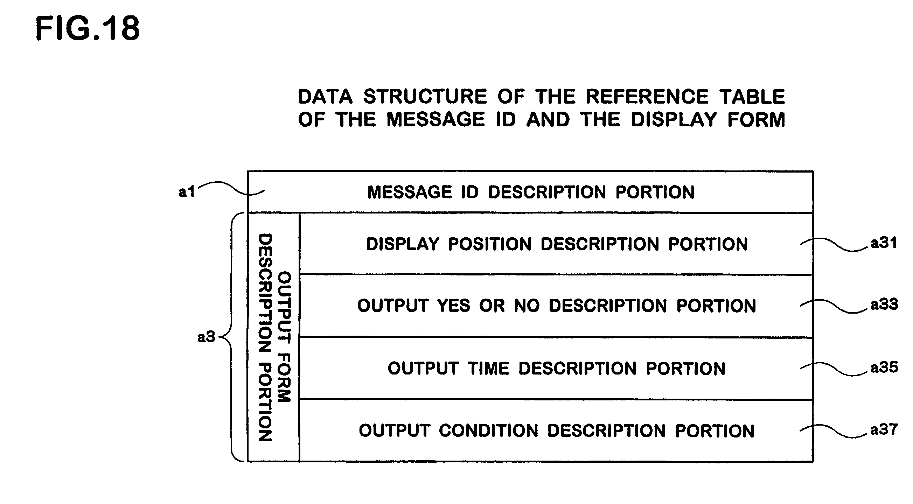

Fig. 18 shows a data structure of the reference table of the message ID and the output form. In the message ID table of the conventional event message (see Fig.22), output contents and output form are defined for each message ID.

However, in the reference table of the message ID and the output form of the event message of this embodiment, only a output form is defined for each message ID.

The reference table of the message ID and the output form consists of a message ID description portion a1 and an output form description portion a3. The output form description portion a3 includes a display position description portion a31 that describes the display position of the sub contents, an output yes or no description portion a33 that describes whether the sub contents are outputted or not, an output time description portion a35 that describes the output time of the sub contents, an output condition description portion a37 that describes the output condition of the sub contents.

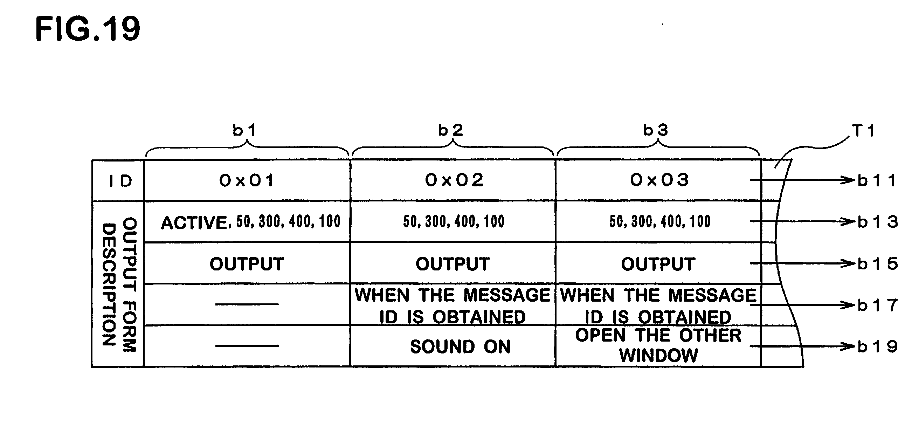

Fig. 19 shows an example of the reference table T1 of the message ID and the output form having the above-mentioned data structure. The reference table T1 of the message ID and the output form is memorized in the memory 411 of the digital broadcast reception device 41.

The the reference table T1 of the message ID and the output form includes blocks b1, b2 , b3,... corresponding to each message ID.

For example, the output form of the message ID "0x01" is defined as follows.

① The output contents data are displayed "in the area from the start position that is 50 pixels from the upper end and 300 pixels from the left end of the active window by a horizontal width of 400 pixels and a vertical width of 100 pixels. ② The output contents data is "always displayed ". ③ The output time is "not defined ". ④ The effect of the display such as blinking display of the output contents is "not defined."

The output form of this message ID "0x01" is described in the message ID table as follows. The code "0x01" is described in the area b11 corresponding to the output form description portion of the blocks b1. The code "active, 50, 300, 400, 100" is described in the area b13 corresponding to the display position description portion. The code "output Yes" is described in the area b15 corresponding to the output yes or no description portion. The code "-(not defined)" is described in the area b17 that corresponds to the output time description portion. The code "-(not defined)" is described in the area that corresponds to the output condition description portion b19.

In this way, the message ID and the output form that corresponds to the message ID are described in the reference table T1 of the message ID and the output form.

### 4.2.2 Output contents

In this embodiment, the output contents mean the information displayed within the above-mentioned display area. For example, the data is "Meteorological information! Heavy rain and flood warning in southern district of Hyogo."

The contents provider generates the sub contents including the message ID and the output contents.

### 4.2.3 Example of the sub contents

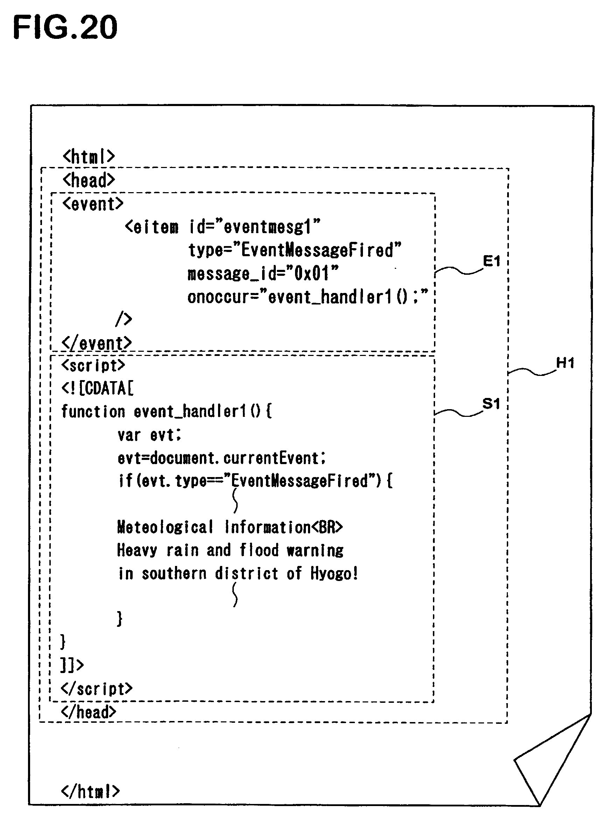

Fig. 20 shows an example of the sub contents data that are transmitted by the digital broadcast transmission device 31 and are described by the script so as to display the above-mentioned output contents on the display device 417 of the digital broadcast reception device 41. When the emergency situation occurs, the contents provider generates the sub contents data as shown in Fig. 20. The transmission side use the digital broadcast transmission device 31 for multiplexing the sub contents data on the main contents data so as to transmit the resulted data.

The script shown in Fig. 20 will be explained. The contents generator describes the message ID and the output contents at the head portion H1 in the tag 〈head〉-〈/head〉 of the self description type data.

The message ID is described at the message_id in the event description portion E1 of the tag 〈bevent〉-〈/bevent〉 in the head portion H1.

Furthermore, the output contents that are displayed in the display area are described in the function defined by "onoccur" in the event description portion E1. This function is defined for the contents generator to perform a desired operation.

With reference to Fig. 20, an event_handler1 function is defined in the script description portion S1 of the tag 〈script〉-〈/script〉. In the event_handler1 function, the output contents "Meteorological information! Heavy rain and flood warning in southern district of Hyogo!" is described that is displayed when the digital broadcast reception device 41 receives the event message (if(evt.typ=="EventMessageFired")).

### 4.3 Flowchart

The actions of the digital broadcast transmission device 31 and digital broadcast reception device 41 of the present embodiment are the same as those of the first embodiment (see Figs. 12, 13). Consequently, their description is omitted here.

### [Other Embodiments]

In the above-mentioned first embodiment, message IDs were sent together with commercial data, which is output content data.
It may be possible, however, to first send all commercial data scheduled for broadcast in a single batch transmission, and store them in the memory 411 of the digital broadcast reception device 91. In this case, the output forms are also included with the data, in order to specify the commercial data to be displayed. Based on this data, the digital broadcast reception device 91 retrieves the specified items from the commercial data stored in the memory 411.

Additionally, in the above-mentioned first embodiment, as an example the data structure of output forms in the reference table T3 of the message ID and output form had an output form description portion a3, a display position description portion a31, an output yes or no description portion a33, an output time description portion a35, an output condition description portion a37, a temporary storage data description portion a39, and a display data location description portion a41. However, as long as there is a means to determine the output form of sub contents data, the embodiments are not limited to this example. The same holds for the second embodiment.

It is also possible for an output form data structure to have some of the items mentioned above.

Furthermore, although the output content of the sub contents in the above-mentioned first embodiment was commercials, the embodiments are not limited to this example. It is also possible for the output content to be a different program from the one currently being broadcast.

In the above-mentioned second embodiment, the main contents were programs and program-related content in HTML format, and the like, and the sub contents was described as emergency information. However, the embodiments are not limited to this. Anything is permissible, as long as the main contents data and sub contents data can be multiplexed, and a transport stream can be generated.

In addition, in the above-mentioned second embodiment, as an example the data structure of output form had an output form description portion a3, a display position description portion a31, an output yes or no description portion a33, an output time description portion a35, and an output condition description portion a37. However, as long as there is a means to determine the output form of sub contents data, the embodiments are not limited to this example.

For example, when displaying emergency information, it is possible to define such parameters as background images, background colors, text font and formatting, and the like. It is also possible to specify sounds to be played in coordination with the sub contents. For example, in the case of emergency information, it is possible to add attention-getting sounds, and in the case of a news flash for professional baseball or the like, it is permissible to add fanfare sounds, and the like.

Furthermore, in the above-mentioned second embodiment, as an example the data structure of the output form had an output form description portion a3, a display position description portion a31, an output yes or no description portion a33, an output time description portion a35, and an output condition description portion a37. However, it is permissible for this structure to have a portion of these.

### Industrial Applicability

As described above, the broadcast system of the present invention will be effective as a broadcast system which displays emergency information, and as a broadcast system which switches between programs and advertisements, and is especially suited to use as a broadcast system which generates transport streams by multiplexing main contents and sub contents.

## Claims

1. A broadcast system comprising:
a transmission device including
a multiplex portion for multiplexing at least main contents data and sub contents data so as to generate a transport stream,
a transmission portion for transmitting the transport stream generated by the multiplex portion,
the multiplex portion generating the sub contents data including an output form ID that indicates an output form of the sub contents as well as an output contents data that indicate an output contents; and
a reception device including
a reception portion for receiving the transport stream transmitted by the transmission device,
a reconstruction portion for controlling reconstruction of main contents and sub contents in accordance with the received transport stream,
the reconstruction portion determining the output form of the sub contents data in accordance with the output form that is predetermined for the output form ID in the received sub contents data, and determining the output contents of the sub contents data in accordance with the output contents data in the received sub contents data, so as to perform the reconstruction control of the sub contents data.

2. A transmission device comprising:
a multiplex portion for multiplexing at least main contents data and sub contents data so as to generate a transport stream; and
a transmission portion for transmitting the transport stream generated by the multiplex portion;
the multiplex portion generating the sub contents data including an output form ID that indicates an output form of the sub contents as well as an output contents data that indicate an output contents.

3. A reception device comprising:
a reception portion for receiving the transport stream transmitted by a transmission device; and
a reconstruction portion for controlling reconstruction of main contents and sub contents in accordance with the received transport stream;
the reconstruction portion determining the output form of the sub contents data in accordance with the output form that is predetermined for an output form ID in the received sub contents data, and determining the output contents of the sub contents data in accordance with the output contents data in the received sub contents data, so as to perform the reconstruction control of the sub contents data.

4. The broadcast system according to claim 1 or the reception device according to claim 3, wherein an output form table describing the output form ID and the output form corresponding thereto is recorded in the reception device.

5. The device or the system according to any one of claims 1-4, wherein the output form includes at least a display position of the sub contents.

6. The device or the system according to any one of claims 1-5, wherein the output form includes at least information about whether the sub contents are outputted or not.

7. The device or the system according to any one of claims 1-6, wherein the output form includes at least an output time of the sub contents.

8. The device or the system according to any one of claims 1-7, wherein the output form includes at least an output condition of the sub contents.

9. The reception device or the system according to any one of claims 1 and 3-8, wherein the reception device determines the output form of the sub contents in accordance with a predetermined output form when the received output form ID is not a predetermined one.

10. The device or the system according to any one of claims 1-9, wherein the sub contents are commercial.

11. The device or the system according to any one of claims 1-9, wherein the sub contents are emergency information.

12. Contents data in which main contents data and sub contents data are multiplexed, wherein the sub contents data include an output form ID that indicates an output form of the sub contents and output contents data that indicate output contents.

13. A reconstruction program for controlling reconstruction of main contents and sub contents, wherein the reconstruction program determines an output form of sub contents data in accordance with a predetermined output form for an output form ID in the sub contents data and determines output contents of the sub contents data in accordance with output contents data in the sub contents data, so as to perform reconstruction control of the sub contents data.

14. A data structure comprising:
an output form description portion that describes an output form; and
an output form ID description portion that describes an output form ID corresponding to the output form described in the output form description portion.

15. A broadcasting method in a broadcast system including a transmission device and a reception device; the method comprising the steps of:
in the transmission device,
generating sub contents data including an output form ID that indicates an output form of sub contents and output contents data that indicates output contents, and
generating a transport stream by multiplexing at least main contents data and the sub contents data, and
transmitting the generated transport stream; and
in the reception device,
receiving the transport stream transmitted by the transmission device,
determining the output form of the sub contents data in accordance with the output form that is predetermined for the output form ID in the received sub contents data, and determining the output contents of the sub contents data in accordance with the output contents data in the received sub contents data, so as to perform the reconstruction control of the sub contents data, and
controlling reconstruction of the main contents in accordance with the received transport stream.

16. A method for generating a transport stream, the method comprising the steps of:
generating sub contents data including an output form ID that indicates an output form of the sub contents as well as an output contents data that indicate an output contents; and
generating a transport stream by multiplexing at least main contents data and the sub contents data.

17. A method for reconstructing a transport stream, the method comprising the steps of:
receiving a transport stream transmitted by a transmission device;
determining an output form of sub contents data in accordance with the output form that is predetermined for an output form ID in the received sub contents data, and determining output contents of the sub contents data in accordance with the output contents data in the received sub contents data, so as to control the reconstruction of the sub contents data.
